# EUROPÄISCHE PATENTSCHRIFT

(11) **EP 0 416 709 B1**
(45) Veröffentlichungstag und Bekanntmachung des Hinweises auf die Patenterteilung: **20.10.1993**
(21) Anmeldenummer: 90202357.1
(22) Anmeldetag: 05.09.1990
(51) Int. Cl.: F16K 11/24, F16K 31/06, D06F 39/08

(54) **Sicherheitseinrichtung für einen Wasserzulauf**
Safety device for water inflow
Arrangement de sûreté pour afflux d'eau

(30) Priorität: 08.09.1989 DE 3929889
(43) Veröffentlichungstag der Anmeldung: 13.03.1991
(73) Patentinhaber: Bauknecht Hausgeräte GmbH, D-70565 Stuttgart (DE); WHIRLPOOL EUROPE B.V., 5507 SK Veldhoven (NL)
(72) Erfinder: Gumm, Manfred, D-6680 Neunkirchen 4 (DE)
(74) Vertreter: Melio, Jan Dirk

(56) Entgegenhaltungen:
- DE-A- 3 606 897
- DE-A- 3 730 684
- GB-A- 626 606
- GB-A- 1 374 172
- US-A- 4 863 098

## Beschreibung

Die Erfindung bezieht sich auf eine Sicherheitseinrichtung für einen Wasserzulauf, insbesondere bei Haushaltgeräten, z. B. Geschirrspülmaschinen, mit zwei hydraulisch in Reihe liegenden Magnetventilen, wobei das in Fließrichtung erste Magnetventil als Zulaufventil dient und bei elektrischer Ansteuerung eines Magnetsystems öffnet und wobei das nachgeschaltete zweite Ventil als Sicherheitsventil ausgebildet ist.

Zulaufventile der oben genannten bekannten Bauart, siehe z.B. DE-A-3 730 684, sind in ihrer Funktion Elektromagnetventile, die durch den anstehenden Leitungsdruck selbsttätig schließen bzw. bei elektrischer Ansteuerung druckausgleichend öffnen. Bei derartig aufgebauten Ventilen haben Schmutzteilchen in den Ausgleichsöffnungen oder auf den Sitzen zur Folge, daß die Ventile nicht mehr schließen, obwohl eine elektrische Abschaltung erfolgt ist. Um diese Gefahr bei Einfachventilen zu vermindern, hat man schon seit längerer Zeit zwei derartige Ventile hydraulisch hintereinander geschaltet und parallel angesteuert, so daß die genannten Fehlerfälle stark reduziert werden konnten. Das zweite nachgeschaltete Ventil übernimmt dabei die Schließfunktion bei Ausfall des ersten oder umgekehrt. Derartige Bauarten haben jedoch den Nachteil, daß ein Fehlerfall nicht erkannt werden kann. Fällt zu irgendeinem Zeitpunkt z. B. ein Ventil aus, so wird die Funktion des zu betreibenden Gerätes nicht gestört, da das zweite Ventil programmgemäß weiter arbeitet. Es sind bereits einige Versuche zur Lösung dieses Problems gemacht worden, die jedoch bisher nicht zu einem befriedigenden Ergebnis geführt haben.

So zeigt z. B. die eingangs genannte, durch die DE-A- 37 30 684 bekannt gewordene Sicherheitseinrichtung eine Bauart, bei der ein Fehler selbsttätig angezeigt oder erkannt werden kann. Bei dieser bekannten Bauart ist das erste Magnetventil mit einer bekannten Servosteuerung versehen, die eine mit Öffnungen versehene Membran und eine durch den Ventilstößel verschließbare Ausgleichsbohrung aufweist. Das zweite Magnetventil enthält dabei einen Verschlußteller, der zum Öffnen des Ventils durch den Magnetantrieb nur im drucklosen Zustand vom Ventilsitz abgehoben werden kann. Die Ansteuerung dieser bekannten Sicherheitseinrichtung erfolgt derart, daß beim Öffnen des Zulaufs zuerst das zweite Magnetventil erregt und beim Schließen des Zulaufs zuerst das erste Magnetventil entregt wird. Damit wird erreicht, daß im normalen Betriebszustand am zweiten Magnetventil kein Druck ansteht. Wenn dagegen bei Störung des ersten Magnetventiles am zweiten Magnetventil ein Druck ansteht, kann dieses zwar geschlossene aber nicht wieder geöffnet werden. Dieses nachgeschaltete Magnetventil wird ausschließlich als Notventil betrachtet. Diese Funktionsrichtung erfolgt über die elektrische Ansteuerung. Die Praxis hat jedoch gezeigte daß über den gesamten Druckbereich von 0,3·10⁵ bis 10⁶ Pa (0,3 bis 10 bar) diese Notfunktion nicht immer erfüllt wird.

Der Erfindung liegt die Aufgabe zugrunde, eine Einrichtung der eingangs genannten Art hinsichtlich der Anzeige im Störungsfall zu vereinfachen und die Zuverlässigkeit einer Abschaltung und Anzeige im Störungsfall zu erhöhen.

Diese Aufgabe wird bei einer Sicherheitseinrichtung der eingangs genannten Art dadurch gelöst, daß als zweites Ventil ein Zweikammerventil vorgesehen ist, dessen erste Kammer bei elektrischer Ansteuerung des Magnetsystems durch einen Ventilstößel zu einem Ventileinlaß hin verschließbar ist und durch einen Kanal mit der zweiten Kammer verbunden ist, daß die zweite Kammer von dem Ventileinlaß durch eine geschlossene, mit einem Ventilsitz am Ventilauslaß zusammenwirkende Membran getrennt ist und daß die Membran in Bezug auf den Ventilsitz derart angeordnet ist, daß bei einer Fehlfunktion des ersten Magnetventils und ausgeschalteter Ansteuerung des Magnetsystems durch einen dann erfolgenden Druckausgleich zwischen dem Ventileinlaß und den beiden Kammern die Membran gegen den Ventilsitz gepreßt wird. Durch die erfindungsgemäße Verwendung eines Zweikammerventils für das nachgeschaltete Magnetvenil wird erreicht, daß die erste Kammer des Zweikammerventils bei einem Normalbetriebszustand, d. h. bei Erregung der Magnetsysteme, durch den zugehörigen Magnetstößel zum Ventileinlaß hin verschlossen ist. Dadurch kann sich im Raum oberhalb der nachgeschalteten Membran kein Druck aufbauen, so daß die Membran vom Betriebsdruck angehoben wird und der Wasserdurchlauf gesichert ist. Liegt dagegen eine Störfunktion des ersten Magnetventils vor, z. B. durch Verschmutzung, so kann dieses Magnetventil trotz einer Abschaltung der elektrischen Ansteuerung nicht mehr geschlossen werden, so daß sich ein Druck im Einlaßbereich des zweiten Magnetventils aufbaut. Da bei Entregung die erste Kammer des Zweikammerventils durch den Magnetstößel zum Ventileinlaß hin geöffnet wird, erfolgt ein Druckausgleich über die beiden Kammern, so daß der Druck oberhalb der Membrane größer ist als darunter. Dies hat zur Folge, daß die Membran nicht von ihrem Sitz abheben kann und somit der Wasserzulauf gesperrt ist. Ein weiterer Durchfluß, auch bei Erregung der Spulen, ist nicht mehr möglich und kann nur durch völliges Drucklosmachen des Gesamtventils wieder ermöglicht werden. Beide Magnetventile können bei der erfindungsgemäßen Bauart gleichzeitig angesteuert werden, d. h. es bedarf keiner komplizierten Zeitsteuerung. wie bei der eingangs genannten Bauart.

In einer vorteilhaften Ausgestaltung ist das erste Magnetventil ein servounterstütztes Membranventil mit einer Steueröffnungen aufweisenden Membran und mit einer durch den zugehörigen Ventilstößel verschließbaren Ausgleichsbohrung in der Membran. Durch die Steueröffnungen in der Membran ist daher, im Gegensatz zu der geschlossenen Membran des nachgeschalteten Magnetventils, eine hydraulische Steuerung möglich.

In einer weiteren vorteilhaften Ausgestaltung der Erfindung ist die erste Kammer des Doppelkammerventils zum Ventileinlaß hin durch ein Einsatzstück abgeschlossen, das mit einer kegelförmigen Öffnung zum Durchtritt des am Ende eine kegelförmige Dichtfläche aufweisenden Stößels versehen ist. Dieses Einsatzstück kann in einer weiteren Ausgestaltung eine Lippendichtung aufweisen. Mit Hilfe des Einsatzstückes kann auf einfache Weise eine Abschottung der ersten Kammer des Doppelkammersystems gegenüber dem Einlaß des Ventils erfolgen. Das in der Einsatzplatte eingebaute Lippenventil dient als Überdruckregulator für den Fall, daß der Ventilstößel in der ersten Kammer durch zu schnelles Schließen einen kurzzeitigen Überdruck in den beiden Kammern erzeugen sollte.

In weiterer Ausgestaltung der Erfindung wird bei einer gemeinsamen Erregung der beiden Magnetventile das erste Magnetventil durch Öffnen der Ausgleichbohrungen geöffnet, während bei dem Doppelkammerventil durch Schließen der Öffnung im Einsatzstück beide Kammern von dem Ventileingang und damit vom Durchfluß getrennt werden. Durch die gleichzeitige Erregung der beiden Magnetsysteme erfolgt eine gleichzeitige Betätigung der Magnetstößel, so daß im Normalbetriebszustand ein einwandfreies Arbeiten gewährleistet ist. Beim Abschalten der Erregung dagegen ist gewährleistet, daß der Zugang zu der ersten Kammer geöffnet ist, so daß im Falle einer Fehlfunktion bei ausgeschalteter Ansteuerung ein zuverlässiger Druckausgleich bis in die zweite Kammer oberhalb der geschlossenen Membran erfolgen kann.

Ein konstruktiver Vorteil besteht darin, daß in einer weiteren Ausgestaltung der Erfindung beide Magnetventile ein gemeinsames Grundgehäuse mit je einem Ventildeckel für das erste und zweite Magnetventil aufweisen und daß beide Kammern des Doppelkammersystems im Deckel des zweiten Magnetventils ausgebildet sind und durch das Einsatzstück bzw. die geschlossene Membran gegenüber dem Ventileinlaß abgeschlossen sind.

In der Zeichnung ist in den Fig. 1 bis 3 eine Sicherheitseinrichtung gemäß der Erfindung mit einem ersten und einem nachgeschalteten zweiten Ventil schematisch dargestellt.
Fig. 1 zeigt die Einrichtung bei geschlossenem ersten Ventil, ohne daß die Magnetsysteme angesteuert sind,
Fig. 2 zeigt die Einrichtung bei geöffnetem ersten Ventil nach erfolgter Ansteuerung der Magnetventile (Normalbetriebszustand), und
Fig. 3 zeigt die Einrichtung bei einer Fehlfunktion des ersten Ventils und bei nicht angesteuerten Magnetantrieben.

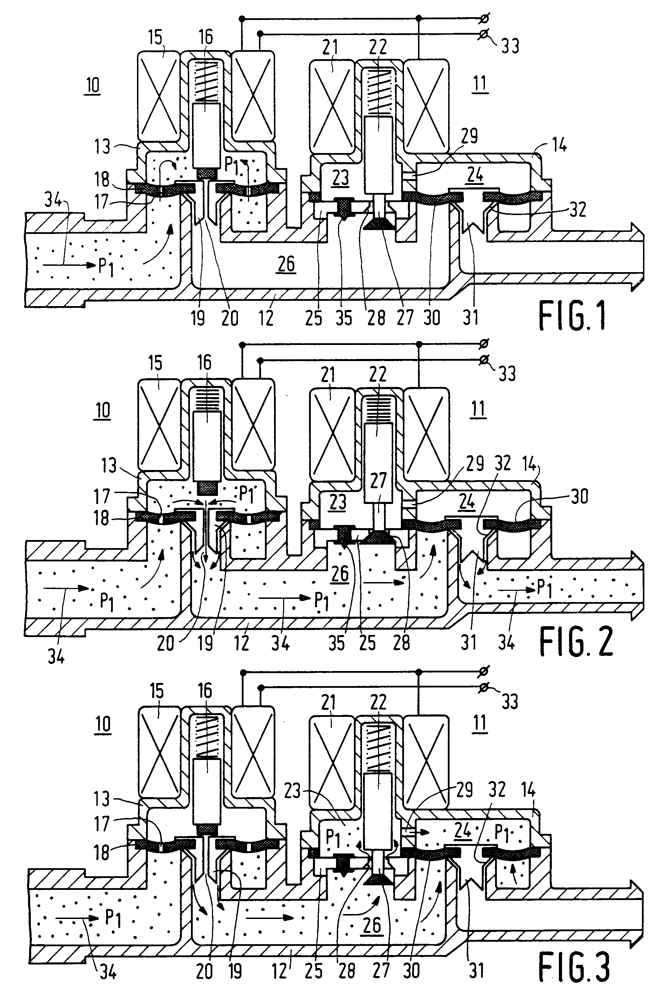

Fig. 1 bis 3 zeigen als Sicherheitseinrichtung eine Zulaufsicherheitsventil, anordnung, die aus zwei hydraulisch hintereinander geschalteten Magnetventilen 10 und 11 aufgebaut ist. Der Wasserzulauf erfolgt an der linken Seite durch Anschluß an eine Wasserleitung und der Wasserablauf an der rechten Seite durch Anschluß an ein Gerät, z. B. eine Geschirrspülmaschine. Das dargestellte Doppelventil enthält ein gemeinsames Grundgehäuse 12 und zwei gesonderte Ventildeckel 13, 14 für die beiden Magnetventile 10 und 11. Das in Fließrichtung erste Magnetventil 10 dient als Hauptventil bzw. als Zulaufventil und besitzt eine Erregerspule 15, einen Ventilstößel 16, eine mit Steueröffnungen 17 versehene Membran 18 und einen Ventilkegel 19 mit einer Ausgleichsbohrung 20. Das nachgeschaltete Magnetventil 11 besitzt eine Spule 21 und einen Magnetstößel 22. Dieses als Sicherheitsventil dienende nachgeschaltete Magnetventil 11 ist als Zweikammerventil mit einer ersten Kammer 23 und einer zweiten Kammer 24 ausgebildet. Die erste Kammer 23 ist durch ein Einsatzstück 25 gegen den Einlaß 26 des Magnetventils 11 abgetrennt, wobei der Stößel 22 mit einem Fortsatz 27 eine Öffnung 28 im Einsatzstück 25 durchsetzt. Die zweite Kammer 24 ist über einen Kanal 29 mit der ersten Kammer 23 verbunden und durch eine geschlossene Membran 30 gegenüber dem Ventileinlaß 26 getrennt. Mit 31 ist ein Ventilkegel bezeichnet. Die Membran 30 liegt auf einem Sitz 32 auf. Mit 33 ist eine Spannungsquelle zur gemeinsamen Ansteuerung der elektrisch parallel geschalteten Magnetventile 10, 11 bezeichnet.

Gemäß Fig. 1 breitet sich der anstehende Wasserdruck P₁ über die Düsenöffnungen 17 oberhalb der Membran 18 aus, so daß ober- und unterhalb der Membran 18 Druckgleichgewicht herrscht. Durch die größere Fläche oberhalb der Membran wird die Zuhaltekraft des Ventilkegels 19 erzeugt, so daß das Magnetventil 10 in diesem Zustand den Durchfluß sperrt. Das nachgeschaltete Sicherheitszulaufventil 11 wird in dieser Situation nicht mit Druck bzw. Wasser beaufschlagt.

Fig. 2 beschreibt die Durchlaßfunktion im Normalbetriebszustand, wobei die Spulen 15, 21 gemeinsam erregt werden, so daß der Ventilstößel 16 die Ausgleichsbohrung 20 freigibt und somit der Durchfluß vom Hauptventil 10 zum nachgeschalteten Sicherheitsventil 11 erfolgen kann. Durch Erregung der Spule 21 ist der Stößel 22 angezogen und die Öffnung 28 durch den Fortsatz 27 im Einsatzstück 25 verschlossen. Damit kann sich in den Kammern 23 und 24 kein Druckaufbauen, so daß die Membran 30 den Durchfluß freigibt. Die Pfeile 34 zeigen in Richtung des Wasserdurchflusses. Die mit Wasser gefüllten Teile sind in allen drei Figuren gepunktet dargestellt.

Fig. 3 zeigt die Sicherheitsfunktion, bei der als Annahme eine Fehlfunktion im Vorventil, und zwar durch Verschmutzung der Düsenöffnungen 17, angenommen wird. Beide Spulen 15, 21 liegen nicht unter Spannung. Da sich infolge der Verschmutzung oberhalb der Membran kein höherer Druck aufbauen kann, läßt das Ventil 10 Wasser durch und dieses gelangt durch die Öffnung 28 in die Kammer 23 und durch den Kanal 29 in die Kammer 24 des nachgeschalteten Ventils 11. Durch den somit anstehenden Druck wird die Membran 30 fest auf den Ventilsitz 32 gepreßt und schließt das Sicherheitsventil 11. Ein weiterer Durchfluß, auch bei Erregung der Spulen 15, 21, ist nicht mehr möglich und kann nur durch völliges Drucklosmachen des Gesamtventils wieder ermöglicht werden.

Die Sicherheitsstufe der Sicherheitseinrichtung gemäß der Erfindung wird im Gegensatz zu den herkömmlichen Ventilen durch die elektrische Ansteuerung außer Funktion gesetzt und übernimmt praktisch erst im stromlosen Zustand die Sicherheitsfunktion. Hat sie jedoch einmal angesprochen, so kann auch ein elektrisches Ansteuern keine Öffnung mehr bewirken. Die Sicherheitseinrichtung erfaßt und vermeidet somit einen Fehler und verhindert durch die Dauerabschaltung einen größeren Folgeschaden.

Eine in dem Einsatzstück 25 vorgesehene Lippendichtung 35 dient als überdruckregulator für den Fall, daß der Ventilstößel 22 durch zu schnelles Schließen einen kurzzeitigen Überdruck in den Kammern 23, 24 erzeugt.

## Patentansprüche

1. Sicherheitseinrichtung für einen Wasserzulauf, insbesondere bei Haushaltgeräten, z. B. Geschirrspülmaschinen, mit zwei hydraulisch in Reihe liegenden Magnetventilen (10, 11), wobei das in Fließrichtung erste Magnetventil (10) als Zulaufventil dient und bei elektrischer Ansteuerung eines Magnetsystems öffnet und wobei das nachgeschaltete zweite Ventil (11) als Sicherheitsventil ausgebildet ist, dadurch gekennzeichnet,
a) daß als zweites Ventil (11) ein Zweikammerventil vorgesehen ist, dessen erste Kammer (23) bei elektrischer Ansteuerung des Magnetsystems durch einen Ventilstößel (22) zu einem Ventileinlaß (26) hin verschließbar ist und durch einen Kanal (29) mit der zweiten Kammer (24) verbunden ist,
b) daß die zweite Kammer (24) von dem Ventileinlaß (26) durch eine geschlossene Membran (30) getrennt ist, die mit einem Ventilsitz (32) am Ventilauslaß zusammenwirkt, und
c) daß die Membran (30) in Bezug auf den Ventilsitz (32) derart angeordnet ist, daß bei einer Fehlfunktion des ersten Magnetventils (10) und ausgeschalteter Ansteuerung des Magnetsystems durch einen dann erfolgenden Druckausgleich zwischen dem Ventileinlaß (2b) und den beiden Kammern (23, 24) die Membran (30) gegen den Ventilsitz (32) gepreßt wird.

2. Sicherheitseinrichtung nach Anspruch 1, dadurch gekennzeichnet, daß das erste Magnetventil (10) ein servounterstütztes Membranventil ist mit einer Steueröffnungen (17) enthaltenden Membran (18) und einer durch den zugehörigen Ventilstößel (16) verschließbaren Ausgleichsbohrung (20) in der Membran (18).

3. Sicherheitseinrichtung nach Anspruch 1 oder 2, dadurch gekennzeichnet, daß die erste Kammer (23) des Zweikammerventils (11) zum Ventileinlaß (26) hin durch ein Einsatzstück (25) abgeschlossen ist, das mit einer kegelförmigen Öffnung (28) zum Durchtritt des am Ende eine kegelförmige Dichtfläche aufweisenden Stößels (22, 27) versehen ist.

4. Sicherheitseinrichtung nach Anspruch 3, dadurch gekennzeichnet, daß in dem Einsatzstück (25) eine Lippendichtung (35) vorgesehen ist.

5. Sicherheitseinrichtung nach einem der Ansprüche 1 bis 4, dadurch gekennzeichnet, daß bei einer gemeinsamen Erregung der beider Magnetventile (10, 11) das erste Magnetventil (10) durch Öffnen der Ausgleichsbohrung (20) geöffnet wird, während bei dem nachgeschalteten Doppelkammer (11) durch Schließen der Öffnung (28) im Einsatzstück (25) beide Kammern (23, 24) vom Ventileingang (26) und damit vom Durchfluß getrennt werden.

6. Sicherheitseinrichtung nach einem der Ansprüche 1 bis 5, dadurch gekennzeichnet, daß beide Magnetventile (10, 11) ein gemeinsames Grundgehäuse (12) mit je einem Ventildeckel (13, 14) aufweisen und daß beide Kammern des Zweikammerventils (11) im Deckel (14) ausgebildet sind und durch das Einsatzstück (25) einerseits und die Membran (30) andererseits gegenüber dem Ventileingang (26) abgetrennt sind.

## Claims

1. A safety device for a water supply, in particular in household equipment, e.g. dishwashers, with two hydraulic solenoid valves (10, 11) lying in series, in which the first solenoid valve (10) in the direction of flow serves as supply valve and opens with the electrical control of a magnet system and in which the subsequently arranged second valve (11) is constructed as a safety valve, characterised in that
a) as second valve (11) a two-chambered valve is provided, the first chamber (23) of which, with electrical control of the magnet system by a valve tappet (22) is able to be closed towards a valve inlet (26) and is connected with the second chamber (24) through a channel (29),
b) the second chamber (24) is separated from the valve inlet (26) by a closed diaphragm (30), which cooperates with a valve seat (32) at the valve outlet, and
c) the diaphragm (30) is arranged in relation to the valve seat (32) such that with a faulty functioning of the first solenoid valve (10) and the disconnected control of the magnetic system by a pressure equalisation which then takes place between the valve inlet (26) and the two chambers (23, 24), the diaphragm (30) is pressed against the valve seat (32).

2. A safety device according to Claim 1, characterised in that the first solenoid valve (10) is a servo-supported diaphragm valve with a diaphragm (18) containing control openings (17) and with an equalizing bore (20) in the diaphragm (18), which bore is able to be closed by the associated valve tappet (16).

3. A safety device according to Claim 1 or 2, characterised in that the first chamber (23) of the two-chambered valve (11) is closed off towards the valve inlet (26) by an insert piece (25), which is provided with a conical opening (28) for the passage of the tappet (22,27) which has a conical sealing surface at the end.

4. A safety device according to Claim 3, characterised in that a lip seal (35) is provided in the insert piece (25).

5. A safety device according to one of Claims 1 to 4, characterised in that with a common excitation of the two solenoid valves (10,11) the first solenoid valve (10) is opened by opening the equalizing bore (20), whereas with the subsequently arranged double chamber (11), through closing the opening (28) in the insert piece (25), both chambers (23,24) are separated from the valve inlet (26) and hence from the through flow.

6. A safety device according to one of Claims 1 to 5, characteri sed in that both solenoid valves (10, 11) have a common base housing (12) with each having a valve cover (13, 14) and that both chambers of the two-chambered valve (11) are constructed in the cover (14) and are separated with respect to the valve inlet (26) by the insert piece (25) on the one hand and by the diaphragm (30) on the other hand.

## Revendications

1. Dispositif de sécurité pour une arrivée d'eau, notamment dans des appareils ménagers, par exemple des lave-vaisselle, comportant deux électrovannes (10, 11) montées hydrauliquement en série, la première électrovanne (10), dans le sens de l'écoulement, faisant office de vanne d'arrivée et s'ouvrant lors d'une excitation électrique d'un système magnétique, la seconde vanne (11) en aval étant réalisée en tant que vanne de sécurité, caractérisé
a) en ce qu'en guise de seconde vanne (11) est prévue une vanne à deux chambres, dont la première chambre (23), lors de l'excitation électrique du système magnétique, peut être fermée par rapport à une entrée de vanne (26) par un poussoir de vanne (22), et est reliée par un canal (29) à la seconde chambre (24),
b) en ce que la seconde chambre (24) est isolée de l'entrée de vanne (26) par une membrane fermée (30) qui coopère avec le siège de vanne (32) à la sortie de vanne, et
c) en ce que la membrane (30), par rapport au siège de vanne (32), est disposée de manière à ce que lors d'un fonctionnement défectueux de la première électrovanne (10) et un arrêt de l'excitation du système magnétique, la membrane (30) est appliquée contre le siège de vanne (32) par un équilibrage de pression s'établissant alors entre l'entrée de vanne (26) et les deux chambres (23, 24).

2. Dispositif de sécurité selon la revendication 1, caractérisé en ce que la première électrovanne (10) est réalisée en tant que vanne à membrane assistée comportant une membrane (18) possédant des ouvertures de commande (17), et un alésage d'équilibrage (20) dans la membrane (18), pouvant être fermé par le poussoir de vanne (16) correspondant.

3. Dispositif de sécurité selon la revendication 1 ou 2, caractérisé en ce que la première chambre (23) de la vanne à deux chambres (11) est fermée par rapport à l'entrée de vanne (26), au moyen d'une pièce d'insert (25), qui est pourvue d'une ouverture (28) de forme conique pour le passage du poussoir de vanne (22, 27) comportant à son extrémité, une surface d'étanchéité conique.

4. Dispositif de sécurité selon la revendication 3, caractérisé en ce que dans la pièce d'insert (25) est prévu un joint d'étanchéité à lèvre (35).

5. Dispositif de sécurité selon l'une des revendications 1 à 4, caractérisé en ce que lors d'une excitation commune des deux électrovannes (10, 11), la première électrovanne (10) est ouverte par ouverture de l'alésage d'équilibrage (20), tandis que dans la vanne à deux chambres (11) en aval, par fermeture de l'ouverture (28) dans la pièce d'insert (25), les deux chambres (23, 24) sont isolées de l'entrée de vanne (26) et ainsi du passage de l'écoulement.

6. Dispositif de sécurité selon l'une des revendications 1 à 5, caractérisé en ce que les deux électrovannes (10, 11) comportent un carter de base commun (12) comprenant pour chacune un couvercle de vanne (13, 14), et en ce que les deux chambres de la vanne à deux chambres (11) sont réalisées dans le couvercle (14) et sont isolées de l'entrée de vanne (26), par la pièce d'insert (25) d'une part, et la membrane (30) d'autre part.
